# EUROPÄISCHE PATENTSCHRIFT

(11) **EP 2 759 733 B1**
(45) Veröffentlichungstag und Bekanntmachung des Hinweises auf die Patenterteilung: **09.05.2018**
(21) Anmeldenummer: 13002799.8
(22) Anmeldetag: 29.05.2013
(51) Int. Cl.: B60G 17/04, B60G 17/048, B60G 17/052, F16F 9/05, F16F 9/00, F16F 9/04

(54) **Luftfeder mit adsorptivem Material**
Pneumatic spring with adsortif material
Suspension pneumatique avec matériau adsorbant

(30) Priorität: 29.01.2013 EP 13000430
(43) Veröffentlichungstag der Anmeldung: 30.07.2014
(73) Patentinhaber: Vibracoustic GmbH, 64293 Darmstadt (DE)
(72) Erfinder: Berg, Jürgen, 22885 Barsbüttel (DE); Gras, Jakob, 22309 Hamburg (DE); Wolf, Matthias, 21339 Lüneburg (DE); Moog, Erhard, 27419 Sittensen (DE)
(74) Vertreter: Flügel Preissner Schober Seidel

(56) Entgegenhaltungen:
- WO-A1-2012/052776
- DE-A1- 2 344 263
- US-A1- 2004 100 005

## Beschreibung

Die vorliegende Erfindung betrifft ein Luftfedersystem, welches wenigstens eine Luftfeder mit mindestens einer Druckluftkammer veränderlichen Volumens hat, die an eine Kompressoreinheit als Druckluftgeber mit oder ohne einen Druckluftspeicher angeschlossen ist Weiterhin betrifft die Erfindung eine Luftfeder oder einen Druckluftspeicher für ein deartiges Luftfedersystem.

Luftfedersysteme dieser Art sind an sich bekannt. Eine wesentliche Aufgabe dieser Systeme ist die Änderung des Höhenniveaus des Fahrzeugs. Auch wird mit dem Luftfedersystem die Fahrdynamik und der Fahrkomfort verbessert. Insbesondere bei Personenkraftwagen besteht jedoch das Problem der eingeschränkten Unterbringungsmöglichkeit. Es steht immer weniger Platz für die Komponenten des Luftfedersystems zur Verfügung. Es werden deshalb Lösungen angestrebt die mit möglichst geringem Bauraum auskommen.

Aus der WO 2012/052776 A1 ist es bekannt, adsorptives Material, insbesondere aktivierter Kohlenstoff (Aktivkohle), in Form von Granulat in den Druckluftraum einer Luftfeder einzubringen. Durch das adsorptive Material kann das Luftvolumen in den Drucklufträumen um ein Vielfaches erhöht werden. Die Aufnahme der absorbierten Gasmoleküle steigt mit dem Anstieg des Drucks. Die Erkenntnis hieraus ist, dass durch das Einbringen von adsorptiven Material in die Drucklufträume eine verbesserte, insbesondere weichere Federung bzw. Dämpfung erreicht werden kann. Möglich ist aber auch, durch die Einfügung von adsorptiven Material in die Drucklufträume eine Verringerung der äußeren Abmessungen der Luftfedern bzw. des Druckluftspeichers zu erreichen ohne dabei seine Feder- und Dämpfungseigenschaften zu verändern. Bei den Luftfedern wird eine bessere Federrate und bei den Druckluftspeichern ein kleineres Bauvolumen erreicht.

Es zeigte sich, dass das Granulat eine gute Aufnahme der Gasmoleküle ergibt, jedoch ist die Positionierung des Granulats schwer zu erreichen, auch wenn es beispielsweise durch Gitter in seiner Lage gehalten wird. Während des Betriebs entstehen durch die Bewegung des Granulats unangenehme Geräusche und außerdem ein mechanischer Abrieb als Staub, der zu einem Ausfall von Ventilen und anderen Teilen des Luftfedersystems, wie beispielsweise auch des Trockners oder der Kompressoreinheit führen kann.

Ausgehend von dem bekannten Stand der Technik liegt der Erfindung die Aufgabe zu Grunde, ein Luftfedersystem zu schaffen, welches die bei bisher bekannten Luftfedersystemen auftretenden Nachteile vermeidet.

Die Lösung der gestellten Aufgabe wird mit den Merkmalen des Anspruchs 1 erreicht. In den Unteransprüchen 2 bis 25 sind vorteilhafte Weiterbildungen des Erfindungsgedankens wiedergegeben. In dem nebengeordneten Anspruch 26 wird eine Luftfeder oder ein Druckluftspeicher für ein erfindungsgemäßes Luftfedersystem beansprucht.

Bei dem erfindungsgemäßen Luftfedersystem liegt das adsorptive Material als poröses geometrisches und monolithartiges Element vor, das aus einem körnigen Ausgangsstoff durch Agglomeration gebildet ist. Hierdurch können die Elemente definiert in die Luftfeder oder den Druckluftspeicher eingelegt werden, wodurch Geräusche im Betrieb vermieden werden. Weiterhin tritt kein mechanischer Abrieb oder Staub auf.

Vorteilhaft sind in den Druckluftspeicher und/ oder die Luftfeder ein oder mehrere Elemente eingesetzt.

Um einen guten Luftzugang zu dem adsorptiven Material aufrecht zu erhalten, kann das Element mit Druckluftkanälen versehen sein. Diese Druckluftkanäle können beispielsweise aus in das Element eingelegten Faserbündel bestehen. Die Freiräume zwischen den einzelnen Fasern des Faserbündels lassen eine gute Druckluftzufuhr zu dem adsorptiven Material zu.

Die Befestigung der Elemente in den Luftfedern bzw. im Druckluftspeicher kann form-, kraft- oder stoffschlüssig erfolgen.

Die Herstellung der monolithartigen Elemente wird bevorzugt durch Agglomeration eines körnigen Ausgangsstoffes durchgeführt. Dabei ist es günstig, wenn die Agglomeration durch einen Sintervorgang unter Anwendung von Druck und erhöhter Temperatur erfolgt. Gegebenenfalls kann der Agglomeration ein Harz als Bindemittel beigegeben sein. Das Harz wird so ausgewählt, dass es die Verbindung der körnigen Teile des adsorptiven Materials begünstigt ohne Abdeckung der Oberflächen der Körner um den Zugang der Druckluft zu dem adsorptiven Material nicht zu unterbrechen.

Bevorzugt werden die Elemente gesondert vom Einsatzort hergestellt. Die fertigen Teile werden dann in den Druckluftspeicher oder die Luftfedern eingesetzt. Möglich ist aber auch, dass die Agglomeration des bzw. der Elemente unmittelbar am Einsatzort erfolgt. Dieses kann beispielsweise durch den Auftrag einer Beschichtung auf die innenliegenden Oberflächen der Druckluftkomponenten erfolgen. Unter anderem kann die Beschichtung auch auf die Innenwand des Rollbalgs aufgetragen werden. Dabei ist es günstig, wenn die durch Beschichtung entstandenen Elemente von einer luftdurchlässigen Schicht abgedeckt sind. Diese Abdeckschicht kann ebenfalls durch eine Beschichtung vor Ort gebildet sein. Hierfür kann ein luftdurchlässiges Elastomer zur Anwendung gelangen.

Eine andere Möglichkeit zur Herstellung des geometrischen Elements besteht darin, dass das adsorptive Material in ein gasdurchlässiges Schaumstoffgefüge eingebettet ist. Dabei wird das körnige adsorptive Material in den Schaumstoff vor dessen Aufschäumung eingefügt. Bei der Anbringung des Elements durch Beschichtung kann auch hier ein aufschäumbares Elastomer verwendet werden.

Je nach Form des Raums in das die Elemente einzusetzen sind kann ein oder auch mehrere Element nebeneinander oder auch an verschiedenen Stellen eingesetzt werden.

Eine günstige Stelle für die Unterbringung des oder der Elemente bei einer Luftfeder ist der Innenraum des Abrollkolbens oder des Topfes. Bei Luftfedern, welche mit Zusatzbehältern versehen sind können die Elemente auch in die Zusatzbehälter eingefügt werden. Dabei können die Zusatzbehälter fest oder auswechselbar mit der Luftfeder verbunden sein. Die äußere Form der Elemente wird in der Regel an die Form des Einsatzortes angepasst.

Allgemein ist festzuhalten, dass bei der Unterbringung der Elemente in einem Zusatzbehälter bei Bedarf die Luftfeder selbst einfacher gestaltet und auch das Speichervolumen des Zusatzbehälters reduziert werden kann. Dieses gilt auch, wenn im Druckluftsystem der Luftfedern ein Druckspeicher eingesetzt wird.

Bei einer Anbringung der Elemente am Rollbalg kann es vorteilhaft sein, wenn die Elemente durch die Seele des Rollbalgs selbst gebildet sind. Hierfür ist die Seele entsprechend auszubilden, indem sie auf ihrer innenliegenden Seite eine luftundurchlässige Wandung hat.

Allgemein ist die Verwendung eines körnigen adsorptiven Materials vorgesehen. In vielen Fällen ist es von Vorteil, wenn eine feinkörnige Struktur vorliegt, da dieselbe bei kleinerem Bauvolumen ein höheres Aufnahmevermögen für Gasmoleküle hat.

Das bevorzugte Ausgangsmaterial ist ein aktivierter Kohlenstoff (Aktivkohle), welcher eine günstige Verarbeitung zulässt.

Der Einsatz des adsorptiven Materials kann sowohl bei Luftfedersystemen mit einem offenen System oder auch mit einem geschlossenen System erfolgen. Bei einem offenen System ist die Kompressoreinheit unmittelbar mit der Außenluft verbunden, während bei einem geschlossenen System die Druckluft innerhalb der Kompressoreinheit des Druckspeichers verbleibt. In beiden Fällen kann für eine Veränderung des Höhenniveaus des Fahrzeugs der Druckluftspeicher mit oder ohne Kompressoreinheit an die Luftfeder des Fahrzeugs angeschlossen werden. Dabei ist es in vielen Fällen günstig, wenn der Druckluftspeicher als erster mit den Luftfedern verbunden wird, da hierdurch eine schnellere Druckerhöhung in den Luftfedern erfolgt, als wenn die Kompressoreinheit als erste angeschlossen wird, da dieselbe eine gewisse Verzögerung bei ihrer Inbetriebnahme hat.

### Kurzbeschreibung der Zeichnung

Anhand mehrerer in der Zeichnung dargestellter Ausführungsbeispiele wird die Erfindung nachstehend näher erläutert.

Es zeigt in schematischer Darstellung:
- Fig. 1: ein offenes Luftfedersystem für ein Fahrzeug;
- Fig. 2: ein geschlossenes Luftfedersystem;
- Fig. 3: einen Längsschnitt durch eine Luftfeder mit einem Aktivkohleelement im Luftfedertopf;
- Fig. 4: einen Schnitt durch einen Luftfedertopf mit einem ringförmigen Aktivkohleelement;
- Fig. 5: den Luftfedertopf nach Fig. 4 mit einem ringförmigen Kohlenstoffelement mit nach innen gerichteten Einzelrippen;
- Fig. 6: den Luftfedertopf mit einem seitlich angebrachten Zusatzvolumen mit mehreren Kohlestoffelementen;
- Fig. 7: einen Längsschnitt durch eine Luftfeder mit einem Kohlenstoffelement in einem inneren Behälter;
- Fig. 8: einen Längsschnitt durch einen Abrollkolben aus Kunststoff mit einer Doppelwandung und einem eingesetzten Aktivkahleelement;
- Fig. 9: im Längsschnitt einen Luftfederdämpfer mit einem Kohlenstoffelement im Abrollkolben am oberen Teil eines Federdämpfers;
- Fig. 10: einen Teilabschnitt eines Rollbalgs mit einer Beschichtung aus Aktivkohle auf der Innenseite des Rollbalges;
- Fig. 11: eine Teilansicht des Rollbalgs mit einer Aktivkohleschicht in der Seele des Rollbalgs mit einer durchlässigen Schicht auf der Innenseite der Seele;
- Fig. 12: ein Diagramm mit Angabe des statischen Aufnahmevermögens eines Elements aus Aktivkohle.

### Ausführung der Erfindung

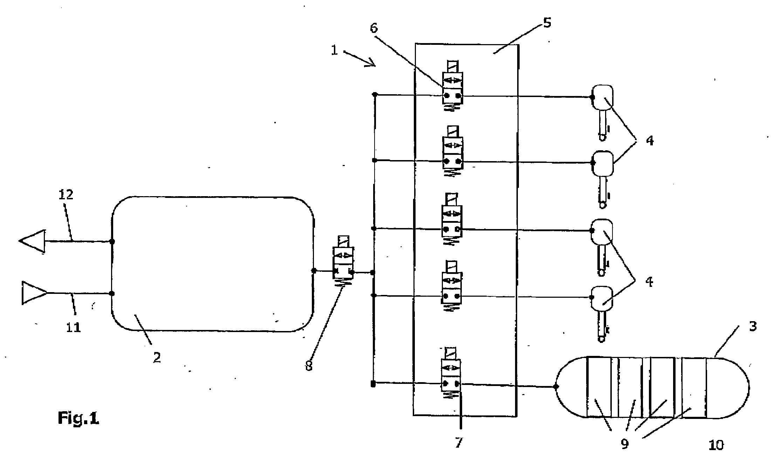

Das in der Fig. 1 gezeigte Luftfedersystem 1 besteht aus der Kompressoreinheit 2 als Druckluftgeber, dem Druckluftspeicher 3, den Luftfedern 4 und dem Ventilblock 5. Der Ventilblock 5 enthält die Ventile 6 für die einzelnen Luftfedern 4 und das Ventil 7 zum Druckluftspeicher 3. Außerdem ist noch das Ventil 8 vorhanden, welches für das Zu- bzw. Abschalten der Kompressoreinheit 2 dient. Über die Leitungen 11 und 12 ist die Kompressoreinheit 2 mit der Umgebung verbunden. in den Druckluftspeicher 3 sind mehrere zylinderförmige Elemente 9 aus bzw. mit adsorptiven Material eingebracht. Die Elemente 9 sind zylinderförmig ausgebildet und haben eine Mehrzahl von Kanälen 10 für die Druckluft. In entsprechender Weise können auch die Luftfedern 4 mit adsorptiven Elementen versehen sein. Das Aufnahmevermögen der Elemente 9 und damit auch die Ausbildung der Komponenten 3 und 4 ist abhängig von der Art der Elemente 9, ihrer Größe und ihrer Menge. Je größer das Aufnahmevermögen der Elemente 9 ist umso kleiner können die Komponenten 3 und 4 sein.

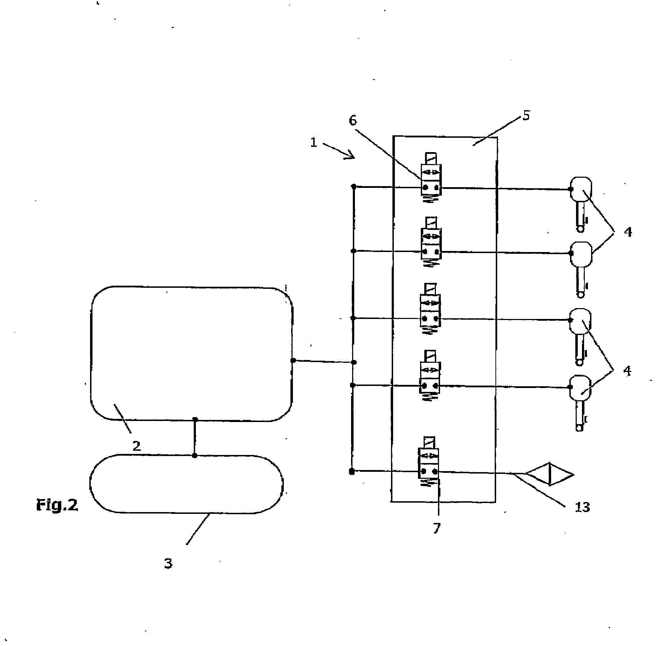

Das in der Fig. 2 gezeigte geschlossene Luftfedersystem 1 hat einen mit Fig. 1 vergleichbaren Aufbau mit der Abweichung, dass der Druckluftspeicher 3 direkt an die Kompressoreinheit 2 angeschlossen ist und die Druckluft in einem geschlossenen System bewegt wird. Die Leitung 13 stellt den Auffüllanschluss dar, welcher auch als Luftemeuerer dient. Die Ventilsteuerung für den Druckluftspeicher 3 befindet sich im Gehäuse der Kompressoreinheit 2.

In der Figur ist auch die Unterbringung von einzelnen Aktivkohleelementen 9 in dem Druckspeicher 10 gezeigt. Diese Druckspeicher 10 gelangen zum Einsatz, wenn eine Speicherung der Druckluft von Vorteil ist. Über die Kompressoreinheit 2 werden die einzelnen Luftfedern 4 und der Druckspeicher 10 mit Druckluft gefüllt. Über die Ventile 6 erfolgt die Steuerung der jeweiligen Strömungswege der Druckluft. Bei Bedarf können auch die Luftfedern 4 mit Aktivkohleelementen 9 ausgestattet sein.

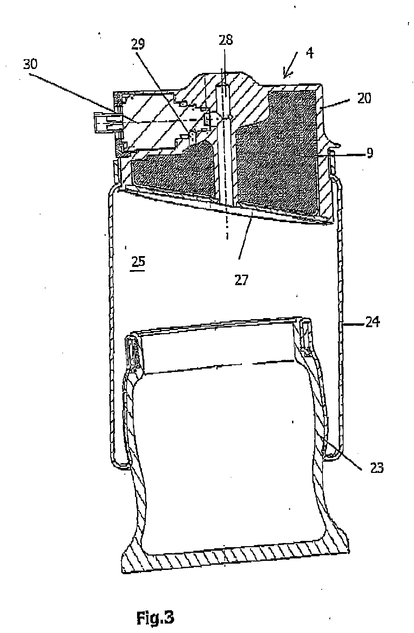

In Figur 3 ist eine Luftfeder 4 dargestellt, die im Wesentlichen aus dem Luftfedertopf 20, dem Abrollkolben 23 und dem Abrollbalg 24 besteht. Die genannten Teile umschließen das Druckgasvolumen 25 der Luftfeder 4. Im Luftfedertopf 20 ist das Element 9 aus adsorptivem Material untergebracht, das aus aktiviertem Kohlenstoff besteht und welches geometrisch so ausgebildet ist, dass es den im Luftfedertopf 20 vorhandenen Freiraum ausfüllt. Im gewählten Beispiel ist der Topf 20 auf seiner zum Druckgasvolumen 25 gerichteten Seite durch die Ringscheibe 27 abgedeckt. Über den Kanal 28 und die Bohrung 29 steht das Volumen 25 mit dem Element 9 in Verbindung. Über das Ventil 30 kann der Durchfluss gesteuert werden. Diese Ausführungsform ermöglicht eine beliebige Zuschaltung der mit dem adsorptiven Material gefüllten Raum zum Gesamtvolumen 25. Hierdurch kann das Aufnahmevermögen im Volumen 25 verändert werden und auch die Federsteifigkeit sowie die Isolierungswirkung bzw. Dämpfung der Luftfeder 4 gesteuert werden. Durch rein physikalische Kräfte können die Moleküle aus den Gasen aus dem Volumen 25 durch die Aktivkohle gebunden werden, was zu einer größeren Gasaufnahme führt, wodurch sich die Federsteifigkeit der Luftfeder 4 verringert. Bei gleicher Federsteifigkeit ist es möglich, das Basisvolumen der Luftfeder 4 zu verkleinern und dadurch weniger komplexe bzw. kleinere Bauteile zu verwenden.

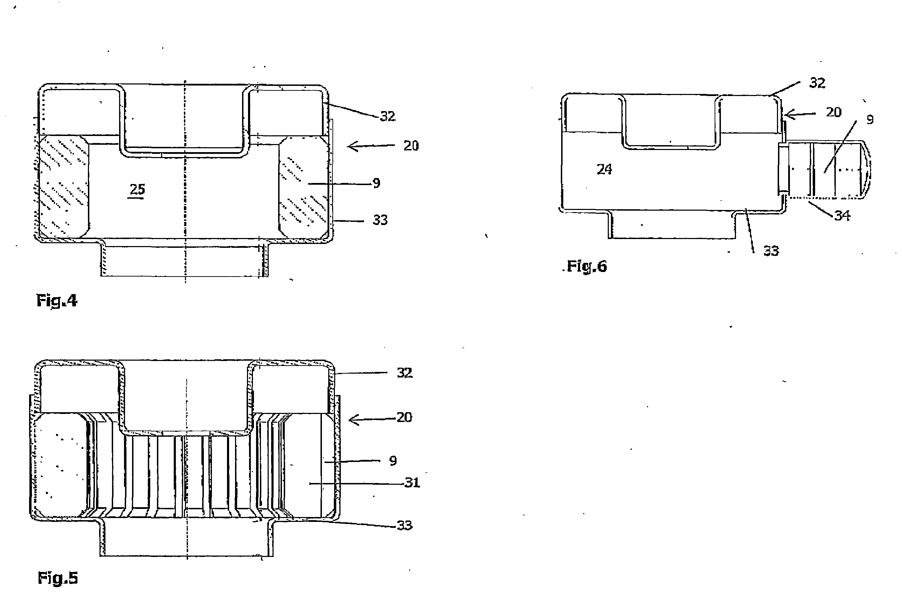

In den Figuren 4 und 5 sind vereinfachte Ausbildungen eines Luftfedertopfes 20 gezeigt, bei denen in der Figur 4 ein ringförmiges Aktivkohlenstoffelement 9 eingesetzt ist, während in der Figur 5 ein vergleichbares Element 9 mit nach innen gerichteten Rippen 31 verwendet wird. Durch die rippenförmige Ausbildung ergibt sich ein schnellerer Zutritt der Druckluft zu der Aktivkohle. Der hier vorgesehene Luftfedertopf 20 besteht aus dem Oberteil 32 und dem Unterteil 33, die beide miteinander verbunden sind. Die Verbindung kann lösbar oder unlösbar gestaltet sein. Das Aktivkohleelement 9 ist in das Teil 33 des Luftfedertopfes 20 eingefügt.

Die Figur 6 zeigt den Luftfedertopf 20 mit einem seitlich angebrachten Zusatzbehälter 34 in den mehrere Einzelelemente 9 eingesetzt sind. Der Zusatzbehälter 34 kann als austauschbare Kartusche ausgebildet sein. Die Befestigung der Kartusche erfolgt auf geeignete Weise am Luftfedertopf 20. Durch die variable Anzahl der Aktivkohleelemente 9 kann das Aufnahmevermögen der Kartusche verändert werden.

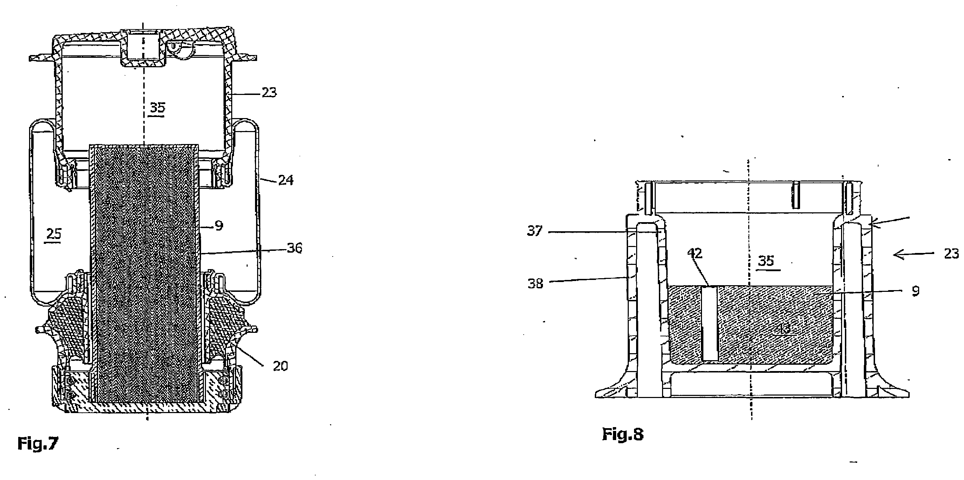

In dem Längsschnitt der Figur 7 ist eine Ausführungsform gezeigt, bei der das Aktivkohlenelement 9 in den Innenraum 35 eines gesonderten Behälters 36 eingefügt ist. Der Behälter 36 ist mit dem Luftfedertopf 20 verbunden und ragt bis in den Innenraum 35 des Abrollkolbens 23.

Figur 8 zeigt eine Ausbildung des Abrollkolbens 23 aus Kunststoff. In diesem Fall ist der Abrollkolben 23 doppelwandig ausgebildet, wobei die Wände 37 und 38 gleiche Wandstärken haben. Die Verwendung von Kunststoff ermöglicht eine möglichst leichte Ausführungsform des Abrollkolbens 23. Der Innenraum 35 des Abrollkolbens 23 ist etwa bis zur Hälfte mit dem Aktivkohlestoffelement 9 gefüllt. In das Element 9 können beispielsweise Bohrungen 42 eingebracht sein um einen schnelleren Gasaustausch zwischen dem kohlenstofffreien Innenraum 35 und dem mit Kohlenstoff gefüllten Raumvolumen 43 der Luftfeder 4 zu ermöglichen. Das Element 9 hat hier die Form eines Zylinders.

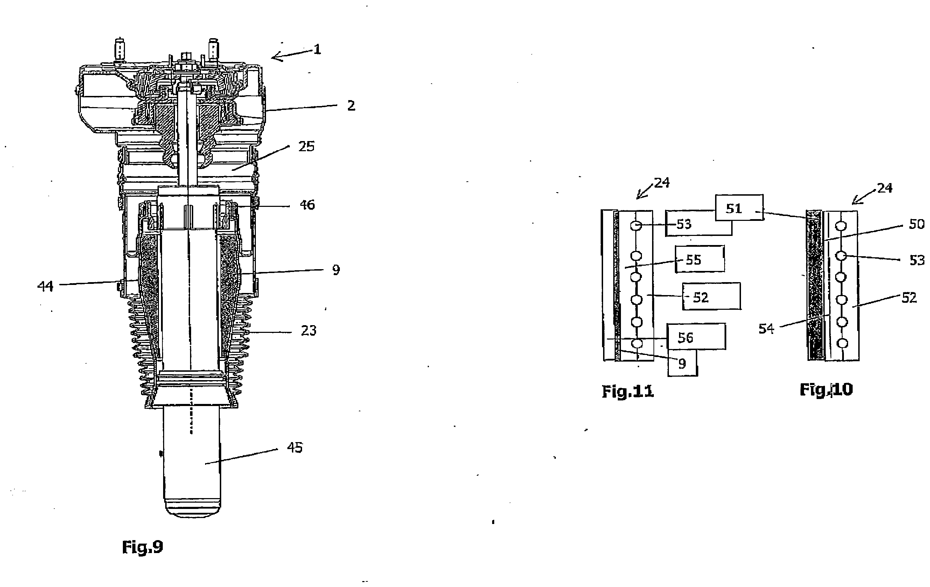

Die Verwendung der Erfindung bei einem Luftfederdämpfer (Federbein) ist in der Figur 9 dargestellt. In der gezeigten Ausführungsform ist die Grundausbildung des Luftfederdämpfers aus Luftfeder 4 und Dämpfer 45 beibehalten. Der Abrollkoiben 23 dagegen ist mit einem vergrößerten Innenvolumen 44 ausgestattet, welches das Kohlenstoffelement 9 aufnimmt. Der hohle zylinderförmige Innenraum des Abrollkolbens 23 ist über Öffnungen 46 mit dem Innenraum 25 oberhalb des Abrollkolbens 23 verbunden. Hierdurch wird ein erheblich größeres Aufnahmevermögen der Druckgasmenge erreicht, so dass auch der Luftfederdämpfer in seinen Abmessungen verringert werden kann.

In den Figuren 10 und 11 sind zwei Möglichkeiten gezeigt, bei denen auf die innenliegende Oberfläche 50 des Rollbalgs 24 eine Beschichtung 51 mit Aktivkohlebestandteilen aufgetragen ist. Die Figur 10 zeigt vereinfacht dargestellt die Deckschicht 52, die Fadenlage des Verstärkungsmaterials 53 und die innenliegende Seele 54. In der Figur 11 ist der Rollbalg 24 mit der Zwischenschicht 55 versehen, auf die ein Aktivkohleelement 9 aufgebracht ist, das von einer luftdurchlässigen porösen Schicht 56 abgedeckt ist.

Eine weitere Möglichkeit für die Ausbildung der Aktivkohleelemente 9 besteht darin, dass die Elemente 9 aus einem gasdurchlässigen Schaumstoffgefüge gebildet sind, in das einzelne Aktivkohle-Teilchen eingebettet sind.

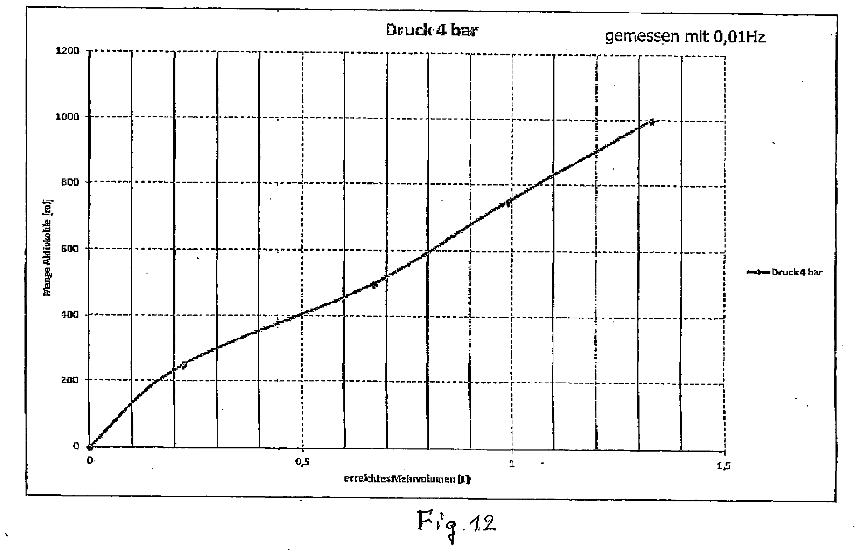

Die Fig. 12 zeigt im Diagramm das statisch mögliche Mehrvolumen an Druckluft in einem 2-Liter Behälter nach Einbringung von Aktivkohleelementen. Auf der Abszisse ist das erreichbare Mehrvolumen an Druckluft in Litern (L) bei der in den Behälter zugegebenen Menge an Aktivkohle in Millilitern (ml) ablesbar. So wird bei einer Zugabe eines Elements mit 400 ml Volumen ein Mehrvolumen an Druckluft im Behälter von 0,5 Liter erreicht bei einem Druck im Behälter von 4 bar.

## Patentansprüche

1. Luftfedersystem (1), welches wenigstens eine Luftfeder (4) mit mindestens einer Druckluftkammer veränderlichen Volumens hat, die an eine Kompressoreinheit (2) als Druckluftgeber mit oder ohne einen Druckluftspeicher (3) angeschlossen ist, **dadurch gekennzeichnet, dass** die Drucklufträume der Luftfedern (4) und/oder des Druckluftspeichers (3) mit einem adsorptiven Material versehen sind und dass das adsorptive Material als poröses geometrisches und monolithartiges Element (9) vorliegt, das aus einem körnigen Ausgangsstoff durch Agglomeration gebildet ist.

2. Luftfedersystem nach Anspruch 1, **dadurch gekennzeichnet, dass** in den Druckluftspeicher (3) und/oder die Luftfedern (4) ein oder mehrere Elemente (9) eingesetzt sind.

3. Luftfedersystem nach Anspruch 1 oder 2, **dadurch gekennzeichnet, dass** das Element (9) mit Druckluftkanälen (10) versehen ist.

4. Luftfedersystem nach Anspruch 3, **dadurch gekennzeichnet, dass** die Druckluftkanäle (10) durch in das Element (9) eingelegte Faserbündel bestehen.

5. Luftfedersystem nach Anspruch 1 bis 4 , **dadurch gekennzeichnet, dass** die Agglomeration durch einen Sintervorgang unter Anwendung von Druck und erhöhter Temperatur erfolgt.

6. Luftfedersystem nach Anspruch 5, **dadurch gekennzeichnet, dass** der Agglomeration ein Harz als Bindemittel beigegeben ist.

7. Luftfedersystem nach Anspruch 1 bis 6, **dadurch gekennzeichnet, dass** die Herstellung der Elemente (9) gesondert vom Einsatzort durchgeführt wird.

8. Luftfedersystem nach Anspruch 1 bis 7, **dadurch gekennzeichnet, dass** die Agglomeration des bzw. der Elemente (9) unmittelbar am Einsatzort erfolgt.

9. Luftfedersystem nach Anspruch 8, **dadurch gekennzeichnet, dass** die Elemente (9) aus einer auf die innen liegende Oberfläche der Druckluftkomponenten (3,4) aufgetragenen Beschichtung (51) bestehen.

10. Luftfedersystem nach Anspruch 9, **dadurch gekennzeichnet, dass** die Beschichtung (51) auf die Innenwand (50) eines Rollbalgs (24) der Luftfeder (4) aufgetragen ist.

11. Luftfedersystem nach Anspruch 1 bis 10, **dadurch gekennzeichnet, dass** das bzw. die Elemente (9) von einer luftdurchlässigen Schicht (56) abgedeckt sind.

12. Luftfedersystem nach Anspruch 11, **dadurch gekennzeichnet, dass** die Schicht (56) durch eine Beschichtung vor Ort gebildet ist.

13. Luftfedersystem nach Anspruch 11 oder 12, **dadurch gekennzeichnet, dass** die Schicht (56) aus einem luftdurchlässigen Elastomer besteht.

14. Luftfedersystem nach Anspruch 1 bis 13, **dadurch gekennzeichnet, dass** die porösen geometrischen Elemente (9) aus einem gasdurchlässigen Schaumstoffgefüge bestehen, in das adsorptives Material eingebettet ist.

15. Luftfedersystem nach Anspruch 1 bis 14, **dadurch gekennzeichnet, dass** das poröse geometrische Element (9) aus einem aufgeschäumten Elastomer mit eingefügtem adsorptiven Material besteht.

16. Luftfedersystem nach Anspruch 1 bis 15, **dadurch gekennzeichnet, dass** das oder die Elemente (9) in den Innenraum (25) eines Abrollkolbens (23) und/oder eines Topfes (20) der Luftfeder (4) oder in einen an einer Luftfeder (4) angeordneten Zusatzbehälter (34) eingesetzt sind.

17. Luftfedersystem nach Anspruch 1 bis 16, **dadurch gekennzeichnet, dass** die Elemente (9) die Form eines Zylinders haben.

18. Luftfedersystem nach Anspruch 1 bis 17, **dadurch gekennzeichnet, dass** die Elemente (9) auswechselbar sind.

19. Luftfedersystem nach Anspruch 1 bis 18, **dadurch gekennzeichnet, dass** die Elemente (9) durch die Seele (56) eines Rollbalgs (24) der Luftfeder (4) gebildet sind.

20. Luftfedersystem nach Anspruch 1 bis 19, **dadurch gekennzeichnet, dass** das adsorptive Material eine feinkörnige Struktur hat.

21. Luftfedersystem nach Anspruch 1 bis 20, **dadurch gekennzeichnet, dass** das adsorptive Material ein aktivierter Kohlenstoff ist.

22. Luftfedersystem nach Anspruch 1 bis 21, **dadurch gekennzeichnet, dass** das Luftfedersystem (1) ein offenes System ist, bei dem die Kompressoreinheit (2) unmittelbar mit der Außenluft verbunden ist.

23. Luftfedersystem nach Anspruch 1 bis 22, **dadurch gekennzeichnet, dass** das Luftfedersystem (1) ein geschlossenes System ist, bei dem die Druckluft in der Kompressoreinheit (2) und im Druckluftspeicher (3) im Kreislauf geführt wird.

24. Luftfedersystem nach Anspruch 1 bis 22 **dadurch gekennzeichnet, dass** für eine Veränderung des Höhenniveaus des Fahrzeugs der Druckluftspeicher (3) mit oder ohne Kompressoreinheit (2) an die Luftfeder (4) des Fahrzeugs anschließbar ist.

25. Luftfeder (4) oder Druckluftspeicher (3) für ein Luftfedersystem (19) nach einem der Ansprüche 1 bis 24, wobei die Drucklufträume der Luftfedern (4) und/oder des Druckluftspeichers (3) mit einem adsorptiven Material versehen sind und dass das adsorptive Material als poröses geometrisches und monolithartiges Element (9) vorliegt, das aus einem körnigen Ausgangsstoff durch Agglomeration gebildet ist.

## Claims

1. An air spring system (1) having at least one air spring (4) with at least one compressed air chamber with a variable volume, which is connected to a compressor unit (2) as a compressed air supply device with or without a compressed air storage device (3), **characterized in that** the compressed air spaces of the air spring (4) and/or of the compressed air storage device (3) is provided with an adsorptive material and that the adsorptive material is provided as a porous geometrical and monolith-like element (9) which is formed from a grained starting material by agglomeration.

2. The air spring system according to claim 1, **characterized in that** one or several elements (9) are inserted in the compressed air storage device (3) and/or in the air springs (4).

3. The air spring system according to claim 1 or 2, **characterized in that** the element (9) is provided with compressed air ducts (10).

4. The air spring system according to claim 3, **characterized in that** the compressed air ducts (10) are comprised of fiber bundles inlaid into the element (9).

5. The air spring system according to claim 1 to 4, **characterized in that** the agglomeration takes place by means of a sintering process with the application of pressure and an increased temperature.

6. The air spring system according to claim 5, **characterized in that** a resin is added as a binding agent to the agglomeration.

7. The air spring system according to claim 1 to 6, **characterized in that** the elements (9) are produced separately from the site of use.

8. The air spring system according to claim 1 to 7, **characterized in that** the agglomeration of the element or the elements (9) takes place right at the site of use.

9. The air spring system according to claim 8, **characterized in that** the elements (9) are comprised of a coating (51) applied to the inner surface of the compressed air components (3, 4).

10. The air spring system according to claim 9, **characterized in that** the coating (51) is applied onto the inner wall (50) of a rolling bellows (24) of the air spring (4).

11. The air spring system according to claim 1 to 10, **characterized in that** the element or the elements (9) are covered by an air-permeable layer (56).

12. The air spring system according to claim 11, **characterized in that** the layer (56) is formed by coating on-site.

13. The air spring system according to claim 11 or 12, **characterized in that** the layer (56) is comprised of an air-permeable elastomer.

14. The air spring system according to claim 1 to 13, **characterized in that** the porous geometrical elements (9) are comprised of a gas-permeable foam material structure into which adsorptive material is embedded.

15. The air spring system according to claim 1 to 14, **characterized in that** the porous geometrical element (9) is comprised of a foamed elastomer with inserted adsorptive material.

16. The air spring system according to claim 1 to 15, **characterized in that** the element(s) (9) are inserted into the internal space (25) of a rolling piston (23) and/or of a pot (20) of the air spring (4) or into an additional container (34) disposed on the air spring (4).

17. The air spring system according to claim 1 to 16, **characterized in that** the elements (9) have the shape of a cylinder.

18. The air spring system according to claim 1 to 17, **characterized in that** the elements (9) are replaceable.

19. The air spring system according to claim 1 to 18, **characterized in that** the elements (9) are formed by the inner lining (56) of a rolling bellows (24) of the air spring (4).

20. The air spring system according to claim 1 to 19, **characterized in that** the adsorptive material has a fine-grained structure.

21. The air spring system according to claim 1 to 20, **characterized in that** the adsorptive material is an activated carbon.

22. The air spring system according to claim 1 to 21, **characterized in that** the air spring system (1) is an open system in which the compressor unit (2) is directly connected to the external air.

23. The air spring system according to claim 1 to 22, **characterized in that** the air spring system (1) is a closed system in which the compressed air is circulated in the compressor unit (2) and in the compressed air storage device (3).

24. The air spring system according to claim 1 to 22, **characterized in that** the compressed air storage device (3) with or without the compressor unit (2) can be connected to the air spring (4) of the vehicle in order to alter the height level of the vehicle.

25. Air spring (4) or compressed air storage device (3) for an air spring system (19) according to claim 1 to 24, wherein the compressed air spaces of the air spring (4) and/or of the compressed air storage device (3) are provided with an adsorptive material and the adsorptive material is provided as a porous geometrical and monolith-like element (9) which is formed from a grained starting material by agglomeration.

## Revendications

1. Système à ressort pneumatique (1) qui comprend au moins un ressort pneumatique (4) avec au moins une chambre à air comprimé de volume variable qui est raccordée à un ensemble compresseur (2) à titre d'émetteur d'air comprimé pourvu ou dépourvu d'un réservoir d'air comprimé (3), **caractérisé en ce que** les chambres à air comprimé des ressorts pneumatiques (4) et/ou du réservoir d'air comprimé (3) sont pourvues d'un matériau adsorbant et le matériau adsorbant se présente sous forme d'élément poreux géométrique et monolithique (9) formé par agglomération à partir d'une substance de départ granulée.

2. Système à ressort pneumatique selon la revendication 1, **caractérisé en ce que** un ou plusieurs éléments (9) sont insérés dans le réservoir d'air comprimé (3) et/ou dans les ressorts pneumatiques (4).

3. Système à ressort pneumatique selon la revendication 1 ou 2, **caractérisé en ce que** l'élément (9) est pourvu de canaux à air comprimé (10).

4. Système à ressort pneumatique selon la revendication 3, **caractérisé en ce que** les canaux à air comprimé (10) sont constitués par des faisceaux de fibres posés dans l'élément (9).

5. Système à ressort pneumatique selon les revendications 1 à 4, **caractérisé en ce que** l'agglomération s'effectue par une opération de frittage en appliquant une pression et une température accrue.

6. Système à ressort pneumatique selon la revendication 5, **caractérisé en ce qu'**une résine est ajoutée à titre de liant à l'agglomération.

7. Système à ressort pneumatique selon les revendications 1 à 6, **caractérisé en ce que** la réalisation des éléments (9) s'effectue séparément du site d'utilisation.

8. Système à ressort pneumatique selon les revendications 1 à 7, **caractérisé en ce que** l'agglomération du ou des éléments (9) s'effectue directement au site d'utilisation.

9. Système à ressort pneumatique selon la revendication 8, **caractérisé en ce que** les éléments (9) sont constitués par un revêtement (51) déposé sur la surface située à l'intérieur des composants à air comprimé (3, 4).

10. Système à ressort pneumatique selon la revendication 9, **caractérisé en ce que** le revêtement (51) est déposé sur la paroi intérieure (50) d'un soufflet déroulant (24) du ressort pneumatique (4).

11. Système à ressort pneumatique selon les revendications 1 à 10 **caractérisé en ce que** le ou les éléments (9) sont recouverts par une couche (56) perméable à l'air.

12. Système à ressort pneumatique selon la revendication 11, **caractérisé en ce que** la couche (56) est formée par un revêtement sur le site.

13. Système à ressort pneumatique selon la revendication 11 ou 12, **caractérisé en ce que** la couche (56) est constituée par un élastomère perméable à l'air.

14. Système à ressort pneumatique selon les revendications 1 à 13, **caractérisé en ce que** les éléments géométriques poreux (9) sont constitués par une structure en mousse perméable aux gaz dans laquelle est noyé le matériau adsorbant.

15. Système à ressort pneumatique selon les revendications 1 à 14, **caractérisé en ce que** l'élément géométrique poreux (9) est constitué par un élastomère moussé avec un matériau adsorbant intégré.

16. Système à ressort pneumatique selon les revendications 1 à 15, **caractérisé en ce que** le ou les éléments (9) sont insérés dans l'espace intérieur (25) d'un piston déroulant (23) et/ou d'un pot (20) du ressort pneumatique (4) ou dans un récipient supplémentaire (34) agencé sur un ressort pneumatique (4).

17. Système à ressort pneumatique selon les revendications 1 à 16, **caractérisé en ce que** les éléments (9) ont la forme d'un cylindre.

18. Système à ressort pneumatique selon les revendications 1 à 17, **caractérisé en ce que** les éléments (9) sont interchangeables.

19. Système à ressort pneumatique selon les revendications 1 à 18, **caractérisé en ce que** les éléments (9) sont formés par l'âme (56) d'un soufflet déroulant (24) du ressort pneumatique (4).

20. Système à ressort pneumatique selon les revendications 1 à 19, **caractérisé en ce que** le matériau adsorbant présente une structure à grains fins.

21. Système à ressort pneumatique selon les revendications 1 à 20, **caractérisé en ce que** le matériau adsorbant est du carbone activé.

22. Système à ressort pneumatique selon les revendications 1 à 21, **caractérisé en ce que** le système à ressort pneumatique (1) est un système ouvert dans lequel l'ensemble compresseur (2) est directement relié à l'air extérieur.

23. Système à ressort pneumatique selon les revendications 1 à 22, **caractérisé en ce que** le système à ressort pneumatique (1) est un système fermé dans lequel l'air comprimé est mené en circuit dans l'ensemble compresseur (2) et dans le réservoir d'air comprimé (3).

24. Système à ressort pneumatique selon les revendications 1 à 22, **caractérisé en ce que** pour une modification du niveau en hauteur du véhicule, le réservoir d'air comprimé (3) pourvu ou dépourvu de l'ensemble compresseur (2) est susceptible d'être raccordé au ressort pneumatique (4) du véhicule.

25. Ressort pneumatique (4) ou réservoir d'air comprimé (3) pour un système à ressort pneumatique (19) selon l'une des revendications 1 à 24, dans lequel les chambres d'air comprimé des ressorts pneumatiques (4) et/ou du réservoir d'air comprimé (3) sont pourvues d'un matériau adsorbant et en ce que le matériau adsorbant se présente sous forme d'élément poreux géométrique ou monolithique (9) qui est formé par agglomération à partir d'une substance de départ granulée.
